# EUROPEAN PATENT APPLICATION

(11) **EP 4 769 727 A2**
(43) Date of publication of application: **01.07.2026**
(21) Application number: 25833592.6
(22) Date of filing: 02.07.2025
(51) Int. Cl.: H01M 50/244, H01M 50/264, H01M 50/502, H01M 50/271, H01M 50/249, B29C 39/10, B29C 39/26

(54) **BATTERY CELL ASSEMBLY, JIG ASSEMBLY FOR MANUFACTURING SAME, AND BATTERY PACK**

(30) Priority: 02.07.2024 KR 20240086702; 01.07.2025 KR 20250087846
(71) Applicant: LG Energy Solution, Ltd., Seoul 07335 (KR)
(72) Inventor: JEON, Byeongjun, Daejeon 34122 (KR); AN, Ji Myong, Daejeon 34122 (KR); KEUM, Jong Yoon, Daejeon 34122 (KR)
(74) Representative: Plasseraud IP
(86) International application number: PCT/KR2025/009391
(87) International publication number: WO 2026/010346

(57) **Abstract**

A battery cell assembly according to an exemplary embodiment of the present disclosure includes a plurality of battery cells, and a potting unit disposed outside the plurality of battery cells and interposed between the plurality of battery cells and configured to fix the plurality of battery cells. A battery cell assembly according to the present disclosure may not include a separate housing having a receiving space for receiving a plurality of battery cells.

## Description

### [TECHNICAL FIELD]

The present disclosure relates to a battery cell assembly, a jig structure for manufacturing the same, and a battery pack.

### [BACKGROUND ART]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Currently, widely used secondary batteries include lithium-ion batteries, lithium polymer batteries, nickel-cadmium batteries, nickel-hydrogen batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

However, in such a battery pack, a structure is required to fix the plurality of battery modules to be received. Therefore, in battery packs of the related art, a separate component is used to fix components such as a battery module case, a busbar, and a battery management system (BMS), resulting in increased material costs and weight.

### [DETAILED DESCRIPTION OF INVENTION]

### [TECHNICAL PROBLEMS]

The present disclosure has been made in an effort to provide a battery cell assembly having a structure in which structural elements such as a busbar, a BMS, and a mounting element are directly secured to a foamed resin without including a separate housing.

The present disclosure has also been made in an effort to improve economic efficiency by reducing material costs of a battery cell assembly and a battery pack.

In addition, the present disclosure has been made in an effort to reduce weights of a battery cell assembly and a battery pack.

Further, the present disclosure has been made in an effort to improve the energy densities of a battery cell assembly and a battery pack.

Furthermore, the present disclosure has been made in an effort to facilitate separation between a battery cell assembly and a jig structure.

However, the technical problems to be solved by the present disclosure are not limited to those described above, and other problems not explicitly mentioned will be apparent those skilled in the art from the following description of the invention.

### [TECHNICAL SOLUTION]

In order to achieve the objects, an exemplary embodiment of the present disclosure provides a battery cell assembly including: a plurality of battery cells; and a potting unit disposed outside the plurality of battery cells and interposed between the plurality of battery cells and configured to fix the plurality of battery cells. The battery cell assembly of the present disclosure does not include a separate housing having a receiving space for receiving the plurality of battery cells.

The potting unit is exposed to the outside of the battery cell assembly.

Another exemplary embodiment of the present disclosure provides a battery pack including one or more of the battery cell assemblies.

In one aspect of the present disclosure, the potting unit may include a resin or a foamed resin.

In another aspect of the present disclosure, an electrical connection portion configured to electrically connect the plurality of battery cells to each other may be included.

Preferably, the electrical connection portion may be configured to be embedded in the potting unit.

In another aspect of the present disclosure, a coupling member embedded in the potting unit and configured to be coupled with another structural element may be included.

Preferably, the coupling member may be configured as an insert nut or a bushing.

In one aspect of the present disclosure, a lower plate configured to support the plurality of battery cells and a lower portion of the potting unit may be included.

In another aspect of the present disclosure, a spacer positioned above the plurality of battery cells and configured to have at least a partially open region to allow at least a portion of the battery cells to be exposed to the outside may be included.

In another aspect of the present disclosure, a top frame provided on an upper portion of the battery cell assembly and configured to surround an outer periphery of side surfaces of the battery cell assembly composed of the plurality of battery cells may be included.

Preferably, the top frame may be configured such that at least one of a busbar and an ICB is mounted thereon.

In addition, the present disclosure provides a vehicle including at least one battery pack according to the above-described exemplary embodiment.

In order to achieve the objects, an exemplary embodiment of the present disclosure provides a jig structure configured to receive a plurality of battery cells therein and to interpose a pad between the jig structure and a plurality of battery cells received in the jig structure.

In one aspect of the present disclosure, the jig structure may include a lower jig configured to support the plurality of battery cells from below; a side jig mounted on the lower jig and configured to cover the plurality of battery cells from a side; a side pad provided on the side jig and configured to come into direct contact with the plurality of battery cells; an upper jig provided above the plurality of battery cells and configured to be coupled with the side jig; and a guide jig detachably configured on one side of the side jig and including a cell receiving portion for receiving the battery cells.

Preferably, the side pad may include silicone.

In another aspect of the present disclosure, the lower jig, the side jig, and the upper jig may be configured to be detachably coupled to each other.

### [EFFECT OF INVENTION]

The battery cell assembly according to the present disclosure does not require a separate housing, and allows structural elements such as a busbar, a BMS, and a mounting element to be directly attached to a foamed resin.

In addition, according to the present disclosure, the economic efficiency can be improved by reducing material costs of the battery cell assembly and the battery pack.

In addition, according to the present disclosure, the weights of the battery cell assembly and the battery pack can be reduced.

In addition, according to the present disclosure, the energy densities of the battery cell assembly and the battery pack can be improved.

In addition, according to the present disclosure, separation between the battery cell assembly and the jig structure can be facilitated.

However, the effects achieved by the present disclosure are not limited to those described above, and other technical effects not explicitly mentioned will be apparent to those skilled in the art from the following description of the invention.

### [BRIEF DESCRIPTION OF THE DRAWINGS]

The accompanying drawings illustrate preferred exemplary embodiments of the present disclosure and, together with the following description of the invention, serve to provide a better understanding of the technical features of the present disclosure, and thus the present disclosure should not be construed as being limited to the drawings.
FIG. 1 is a view illustrating a battery cell according to an exemplary embodiment of the present disclosure.
FIG. 2 is a view illustrating a battery cell assembly according to an exemplary embodiment of the present disclosure.
FIG. 3 is a view illustrating a battery cell assembly according to another exemplary embodiment of the present disclosure.
FIG. 4 is a view illustrating a battery cell assembly according to still another exemplary embodiment of the present disclosure.
FIG. 5 is a view illustrating a battery cell assembly according to yet another exemplary embodiment of the present disclosure.
FIG. 6 is a view illustrating a battery cell assembly according to still yet another exemplary embodiment of the present disclosure.
FIG. 7 is a view illustrating a battery cell assembly according to a further exemplary embodiment of the present disclosure.
FIG. 8 is a view illustrating a completed state of the battery cell assembly of FIG. 7.
FIG. 9 is a view illustrating a vehicle including a battery pack according to an exemplary embodiment of the present disclosure.
FIG. 10 is a view illustrating a jig structure according to an exemplary embodiment of the present disclosure.
FIG. 11 is a view illustrating a process of coupling a guide jig and a side jig to manufacture a battery cell assembly.
FIG. 12 is a top view showing a state in which the structural elements of FIG. 11 are coupled.
FIG. 13 is a view illustrating a state in which a coupling member is coupled on a side jig and a side pad.
FIG. 14 is a view illustrating a process of mounting a plurality of battery cells in the jig structure.
FIG. 15 is a view illustrating a process of mounting a lower plate to the plurality of battery cells.
FIG. 16 is a view illustrating a process of mounting a lower jig on a side jig.
FIG. 17 is a view illustrating a state in which the jig structure of FIG. 16 is turned upside down.
FIG. 18 is a view showing a battery pack according to an exemplary embodiment of the present disclosure.

### [MODES FOR CARRYING OUT THE INVENTION]

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here. The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the present disclosure and to allow one skilled in the art to which the present disclosure belongs to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

An expression that two comparative targets are the same means that they are 'substantially the same'. Accordingly, 'substantially the same' may encompass a deviation of, for example, up to 5%, which is regarded as a low level in the art. In addition, a uniform parameter in a predetermined region may refer to uniform from the average point of view.

Throughout the specification, unless otherwise stated, each element may be interpreted as being in the singular or plural form.

When a component is described as being arranged "above (or below)" or "on (or under") another component, it is to be understood that the component may be arranged in contact with an upper surface (or a lower surface) of another component, or an additional component may be interposed between the two components.

Additionally, when a component is described as being "connected, " "coupled, " or "joined" to another component, it is to be understood that the components may be directly connected or coupled to each other, but the components may be indirectly "connected," "coupled," or "joined" via an additional component interposed therebetween.

Throughout the specification, the description "A and/or B" refers to A, B, or A and B, unless otherwise stated, and the description "C to D" means C or more and D or less, unless otherwise stated.

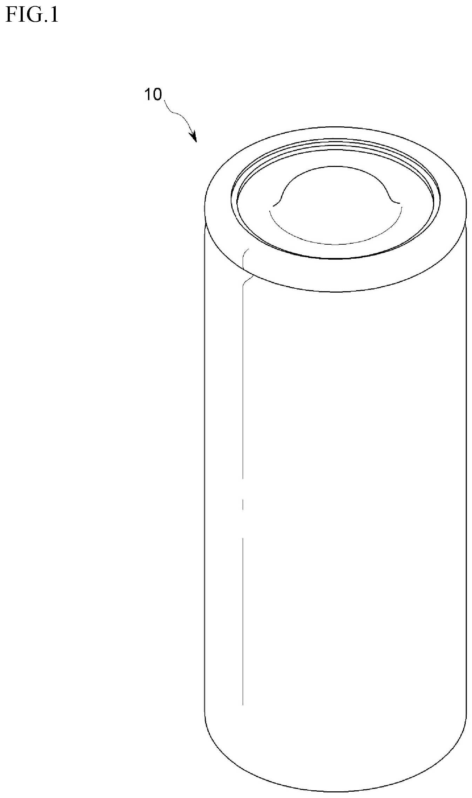

FIG. 1 is a view illustrating a battery cell 10 according to an exemplary embodiment of the present disclosure.

The battery cell 10 according to an exemplary embodiment of the present disclosure is a secondary battery, and may be provided as a cylindrical secondary battery, a pouch-type secondary battery, or a prismatic secondary battery. Hereinafter, in the present exemplary embodiment, it will be described assuming that a plurality of battery cells 10 are cylindrical secondary batteries as shown in FIG. 1.

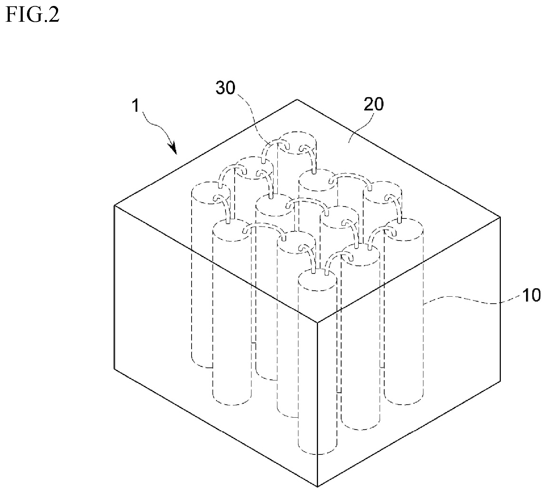

FIG. 2 is a view illustrating a battery cell assembly 1 (or cell block) according to an exemplary embodiment of the present disclosure.

Referring to FIG. 2, the battery cell assembly 1 (cell block) includes a plurality of battery cells 10 and a potting unit 20 configured to fix the plurality of battery cells 10. The battery cell assembly 1 may further include an electrical connection portion 30 and/or a coupling member 40 and/or a lower plate 50 and/or a spacer 60 and/or a top frame 70.

The potting unit 20 may be disposed outside the plurality of battery cells 10 and interposed between the plurality of battery cells 10. That is, the potting unit 20 may be configured to cover both spaces between the battery cells 10 and the outside of a group of the battery cells 10. That is, the battery cell 10 may be configured to be embedded in the potting unit 20.

In one aspect of the present disclosure, the battery cell assembly 1 may not include a separate housing having a receiving space for receiving the plurality of battery cells 10. That is, according to the structure of the present disclosure described above, since the potting unit 20 serves as a structural element that fixes and holds the battery cells 10, a separate housing or case does not need to be included.

Accordingly, a potting resin constituting the potting unit 20 may be exposed on an outer surface of the battery cell assembly 1. As an example, as shown, the battery cell assembly 1 may form a rectangular parallelepiped, and a potting resin may be exposed on six surfaces of the rectangular parallelepiped. Specifically, a potting resin may be exposed on four outer side surfaces (at least two outer side surfaces) of the battery cell assembly 1, may be exposed on an upper surface of the battery cell assembly 1, and may be exposed on a lower surface of the battery cell assembly 1.

The plurality of battery cells 10 may be completely embedded in the potting unit 20 of the battery cell assembly 1 and may not be exposed to the outside of the potting unit 20. Alternatively, as another example, an upper surface or a lower surface of the battery cell 10 may be exposed to the outside of the potting unit 20.

According to the above structure of the present disclosure, which does not require a separate housing and separate components, a structure can be implemented in which structural elements such as a busbar 31, a BMS, and a mounting are directly secured to the potting unit 20 without using a housing or separate injection-molded components. Thus, according to the present disclosure, cost reduction can be achieved by reducing the material cost of the battery cell assembly 1. For example, according to the present disclosure, the cost can be reduced by about 20% or more compared to a battery cell assembly 1 of the related art. In addition, according to the above configuration, the weight of the battery cell assembly 1 can be reduced. Furthermore, according to the above configuration, the energy density of the battery cell assembly 1 can be improved. In addition, according to the present disclosure, the battery cell 10 can be effectively fixed by the potting unit 20.

In one aspect of the present disclosure, the potting unit 20 may have, for example, a substantially rectangular parallelepiped shape. That is, the potting unit 20 may be manufactured by pouring and curing a resin (or a foam resin) in a state in which the plurality of battery cells 10 are mounted in a battery jig having a space in the shape of a substantially rectangular parallelepiped. Accordingly, the resin may be filled between the battery cells 10 to form the potting unit 20, and the resin can surround the battery cells 10. Therefore, the battery cell assembly 1 does not include a separate case, and the potting unit 20 itself can function as a housing of the battery cell assembly 1. Accordingly, there may be no housing or case outside the potting unit 20 of the battery cell assembly 1.

In another aspect of the present disclosure, the potting unit 20 may include a resin or a foamed resin.

For example, the potting unit 20 may include a flame-retardant material. For example, the potting unit 20 may be made of a foamed resin having a flame retardant grade of V-0. The potting unit 20 may be made of a material having properties including heat resistance, electrical insulation, weather resistance, and water repellency. For example, the potting unit 20 may include poly urethane (PU) foam. In another aspect, the potting unit 20 may include a two-component resin.

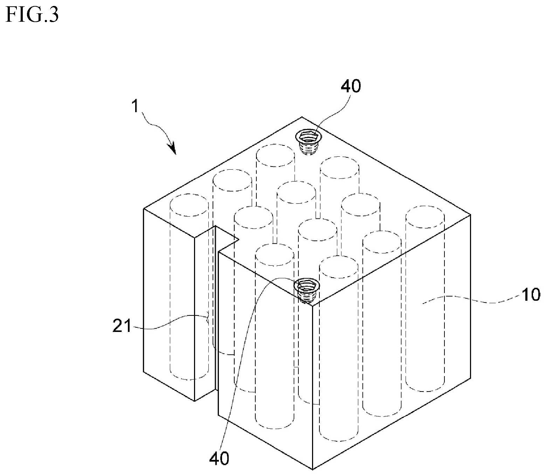

FIG. 3 is a view illustrating a battery cell assembly 1 according to another exemplary embodiment of the present disclosure.

The potting unit 20 may include at least one recessed groove 21 formed by recessing a surface inward. For example, referring to FIG. 3, an elongated groove in the shape of a rod may be provided on one of the side surfaces of the potting unit 20. However, the shape of the recessed groove 21 of the present disclosure is not limited thereto, and any space that can be provided on the potting unit 20 is included in the scope of the exemplary embodiment of the recessed groove 21 of the present disclosure.

According to this structure, structural elements such as a BMS and a mounting that can be included in the battery cell assembly 1 can be easily mounted. That is, the recessed groove 21 can function as a space in which a member, which can be included in the battery cell assembly 1, can be mounted.

In another aspect of the present disclosure, the battery cell assembly 1 may include an electrical connection portion 30.

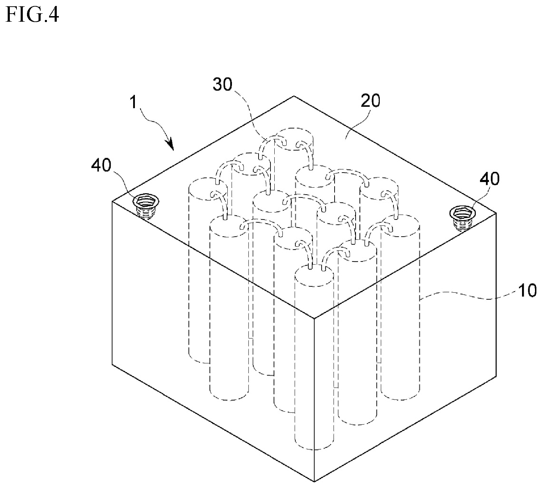

Referring to FIG. 4, the electrical connection portion 30 may be configured to electrically interconnect the plurality of battery cells 10. That is, the electrical connection portion 30 may be made of an electrically conductive material. For example, the electrical connection portion 30 may include metal. More specifically, the electrical connection portion 30 may have a wire bonding structure.

Referring to FIG. 4, one end portion of a battery cell 10 may be electrically connected to one end portion of an adjacent battery cell 10 by the electrical connection portion 30. That is, the battery cell assembly 1 may be configured to have a so-called cell-to-cell connection structure.

With this structure, electrical connection between battery cells 10 can be achieved without a separate structural element such as a busbar 31. Accordingly, a battery cell assembly 1 with reduced manufacturing cost and reduced weight can be manufactured. In addition, according to the above configuration, various types of electrical connection can be achieved without structural limitations due to the structure of the busbar 31.

In one aspect of the present disclosure, the electrical connection portion 30 may be configured to be embedded in the potting unit 20. For example, after one end portion of a battery cell 10 and one end portion of an adjacent battery cell 10 are connected by the electrical connection portion 30, a resin may be injected to embed the electrical connection portion 30 in the potting unit 20.

According to this structure, since the electrical connection portion 30 is not exposed to the outside and is fixed in a certain form inside, stable electrical connection can be ensured. In particular, when the electrical connection portion 30 is a wire bonding that is vulnerable to external impact, the stability of the electrical connection portion 30 can be ensured by the above structure.

FIG. 4 is a view illustrating the battery cell assembly 1 according to still another exemplary embodiment of the present disclosure.

Referring to FIG. 4, the battery cell assembly 1 may include a coupling member 40.

The coupling member 40 may be built in the potting unit 20. That is, the coupling member 40 may be provided in a state of being embedded in the potting unit 20. One end of the coupling member 40 may be exposed to the outside of the potting unit 20. The coupling member 40 can be configured to be coupled with another structural element. That is, the coupling member 40 refers to a member including any coupling method for coupling with another structural element. For example, the coupling member 40 may correspond to an insert nut or a bushing. The coupling member 40 may be configured to be exposed on a surface of the potting unit 20. For example, the coupling member 40 may be configured to be exposed on the upper surface of the potting unit 20, as shown in FIG. 4. Alternatively, the coupling member 40 may be provided on the side surface and/or lower surface of the potting unit 20. Note that the coupling member 40 may be included in plurality in the potting unit 20. The battery cell assemblies 1 can be coupled or connected to each other by the coupling member 40. In addition, the battery cell assembly 1 can be fixed to a pack case of a battery pack 2000 by the coupling member 40.

According to this configuration, structural elements such as a busbar 31, a BMS, and a mounting element can be directly secured to the potting unit 20 without using separate injection-molded components or the like. For example, in an exemplary embodiment where the coupling member 40 is an insert nut, another structural element may be coupled to the insert nut by a bolt. That is, according to the present disclosure, another structural element can be easily coupled directly to the potting unit 20 without a housing or separate injection-molded component.

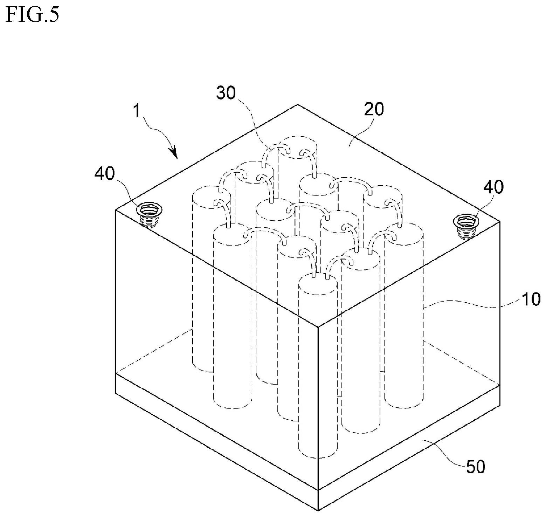

FIG. 5 is a view illustrating the battery cell assembly 1 according to yet another exemplary embodiment of the present disclosure.

Referring to FIG. 5, the battery cell assembly 1 may include a lower plate 50.

The lower plate 50 may be located at a lower portion of the battery cell assembly 1. The lower plate 50 may be configured to have a substantially plate shape extending in a horizontal direction. The lower plate 50 may be configured to support the lower portions of the plurality of battery cells 10 and the potting unit 20. For example, the battery cell assembly 1 may be manufactured by attaching the battery cells 10 to the lower plate 50 with glue, and potting resin thereon. The lower plate 50 may include a metal material. For example, the lower plate 50 may include aluminum metal.

According to the above configuration, the lower plate 50 can support the plurality of battery cells 10 while providing a bottom surface onto which resin can be poured. The lower plate 50 and the potting unit 20 may maintain a coupled state. Accordingly, a more robust battery cell assembly 1 can be provided.

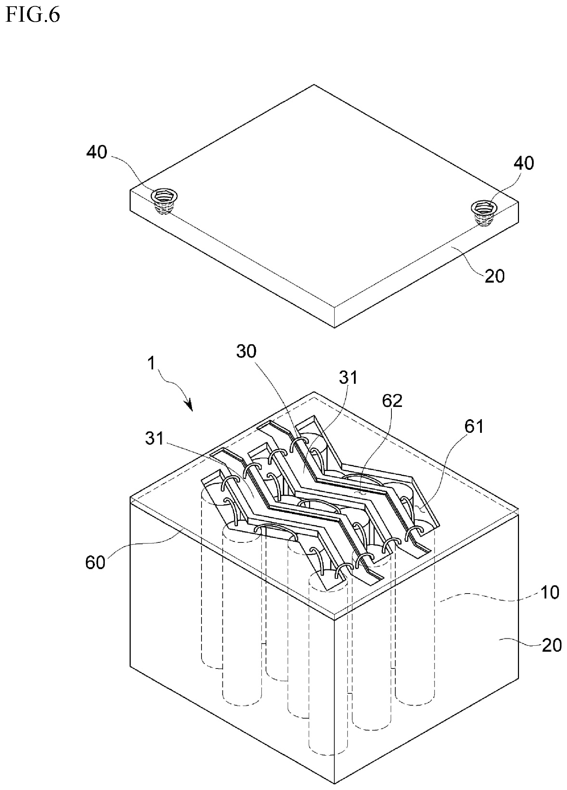

FIG. 6 is a view illustrating the battery cell assembly 1 according to still yet another exemplary embodiment of the present disclosure.

Referring to FIG. 6, the battery cell assembly 1 may include a spacer 60.

The spacer 60 may be configured to have a substantially plate shape extending in a horizontal direction. The spacer 60 may be located above or below the plurality of battery cells 10. The spacer 60 may be configured to have at least a partially open region to allow at least a portion of the battery cells 10 to be exposed to the outside.

For example, the spacer 60 may include an opening 61 formed to penetrate vertically. In this case, one end portion of the battery cell 10 can be exposed through the opening 61. Note that the spacer 60 may include a groove 62 formed on an upper surface thereof and recessed to a predetermined depth. For example, the groove 62 may be configured such that the busbar 31 is seated thereon. For example, the spacer 60 may be configured such that the busbar 31 is seated thereon. The busbar 31 seated on the groove 62 may be electrically connected to one end portion of the battery cell 10 exposed through the opening 61 by the electrical connection portion 30. That is, electrical connection between the busbar 31 and the battery cell 10 can be achieved through the open region of the spacer 60. In this case, the electrical connection portion 30 may be a wire bonding.

In another aspect of the present disclosure, the spacer 60 may be configured to be embedded in the potting unit 20. That is, the spacer 60, the busbar 31, and the electrical connection portion 30 may be embedded in the potting unit 20.

With this structure, stable electrical connection between battery cells 10 is achieved through the spacer 60. In addition, according to the above-described configuration, since the electrical connection portion 30 is not exposed to the outside and is fixed in a certain form inside, stable electrical connection can be ensured. In particular, when the electrical connection portion 30 is a wire bonding that is vulnerable to external impact, the stability of the electrical connection portion 30 can be ensured by the above structure.

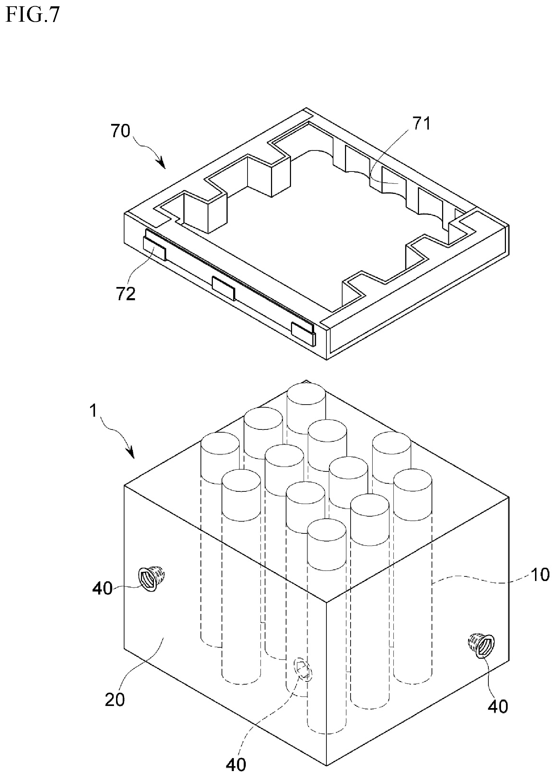

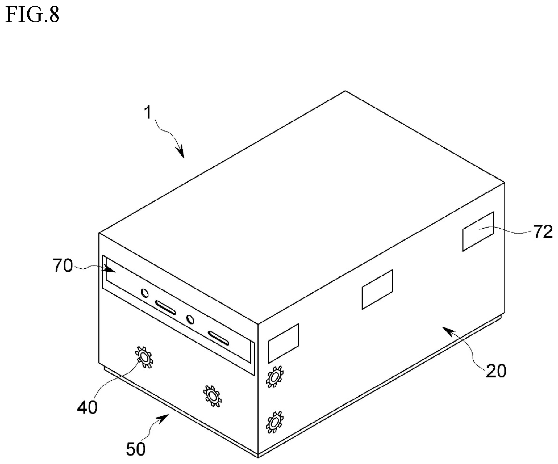

FIG. 7 is a view illustrating the battery cell assembly according to a further exemplary embodiment of the present disclosure, and FIG. 8 is a view illustrating a completed state of the battery cell assembly 1 of FIG. 7.

In one aspect of the present disclosure, the battery cell assembly 1 may include a top frame 70.

Referring to FIGS. 7 and 8, the top frame 70 may be provided on an upper portion of the battery cell assembly 1. The top frame 70 can be configured to surround an outer periphery of side surfaces of a battery cell assembly composed of the plurality of battery cells 10. More specifically, an inner peripheral surface 71 of the top frame 70 may be configured to surround an outer periphery of side surfaces of the battery cell assembly composed of the plurality of battery cells 10. For example, the inner peripheral surface 71 may be configured to have a shape complementary to an outer peripheral surface of the battery cell group composed of the plurality of battery cells 10.

In another aspect of the present disclosure, the top frame 70 may include a mounting portion 72 capable of mounting a component that may be included in the battery cell assembly 1. The top frame 70 may be configured to mount components such as a busbar 31, an ICB, a BMS, a relay, and a current sensor thereon. For example, the top frame 70 may be configured to mount at least one of the busbar 31 and the ICB thereon.

In this case, at least one of the busbar 31 and the ICB may be mounted on the mounting portion 72. The mounting portion 72 may be provided on an outer peripheral surface of the top frame 70.

According to the above configuration, other components included in the battery cell assembly 1 can be easily mounted. That is, according to the present disclosure, by configuring the top frame 70 with only a minimum frame for mounting components, the weight of the battery cell assembly 1 can be reduced while enabling stable mounting of components.

In addition, according to the present disclosure, since the shape of the inner peripheral surface 71 of the top frame 70 matches the shape of the outer peripheral surface of the battery cell group composed of the plurality of battery cells 10, a fixing effect of the battery cells 10 can also be secured.

In another aspect of the present disclosure, the top frame 70 may be configured to be embedded in the potting unit 20. For example, the top frame 70 may be embedded in the potting unit 20 by coupling the top frame 70 to the plurality of battery cells 10 and then potting a resin. According to this structure, since the top frame 70 is fixed in the potting unit 20, the position of the mounting portion 72 can be consistently secured.

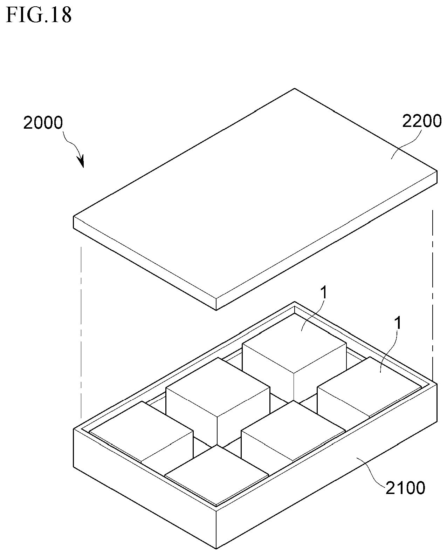

FIG. 18 is a view showing a battery pack according to an exemplary embodiment of the present disclosure. As shown, a battery pack 2000 according to an exemplary embodiment of the present disclosure can receive at least one (or a plurality of) battery cell assemblies 1 inside a pack case.

The pack case may include a lower housing 2100 and a pack lid 2200 coupled to an upper side of the lower housing 2100, and the plurality of battery cell assemblies 1 may be received in an internal space of the lower housing 2100.

The plurality of battery cell assemblies 1 with the outer surfaces of the potting units 20 exposed may be fixed and mounted by a fixing member (for example, a bolt) in the lower housing 2100 of the battery pack 2000. The fixing member such as a bolt may be coupled to the coupling member 40 of the battery cell assembly 1 to fix the battery cell assembly 1.

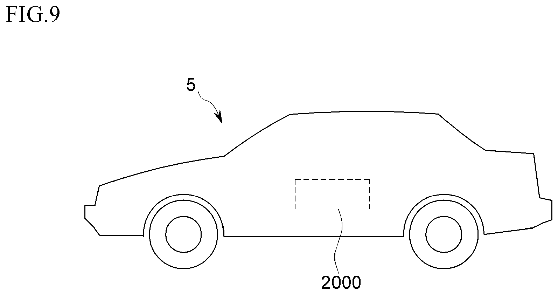

FIG. 9 is a view illustrating a vehicle including the battery pack 2000 according to an exemplary embodiment of the present disclosure.

Referring to FIG. 9, a vehicle 5 according to an exemplary embodiment of the present disclosure may be, for example, an electric vehicle, a hybrid vehicle, or a plug-in hybrid vehicle, and includes the battery pack 2000 according to an exemplary embodiment of the present disclosure. Examples of the vehicle 5 include a four-wheeled vehicle and a two-wheeled vehicle. The vehicle 5 operates by receiving power from the battery pack 2000 according to an exemplary embodiment of the present disclosure. In addition, the vehicle 5 according to an exemplary embodiment of the present disclosure may further include various other components included in a vehicle, in addition to the battery cell 10 and the battery pack 2000. For example, the vehicle 5 according to an exemplary embodiment of the present disclosure may further include a body, a motor, a control device such as an ECU (electronic control unit), and the like, in addition to the battery cell 10 according to an exemplary embodiment of the present disclosure.

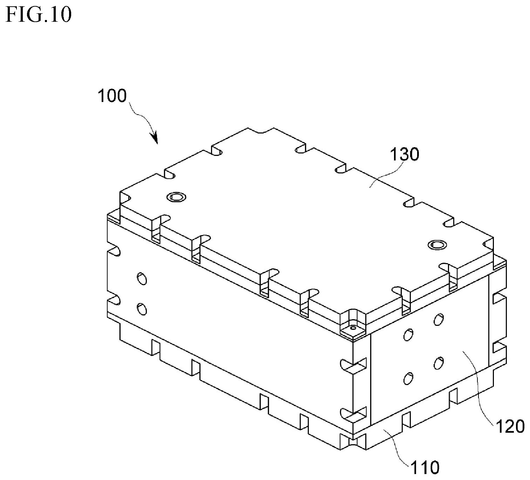

FIG. 10 is a view illustrating a jig structure 100 according to an exemplary embodiment of the present disclosure.

Referring to FIG. 10, the jig structure 100 may be configured to receive the plurality of battery cells 10 therein. The jig structure 100 may be configured to interpose a pad 200 between the jig structure 100 and the plurality of battery cells 10 received in the jig structure 100. The jig structure 100 may be for manufacturing the battery cell assembly 1.

At least one through-hole may be provided on one side of the jig structure 100 according to an exemplary embodiment of the present disclosure. For example, at least one through-hole may be provided on an upper side of the jig structure 100. The through-hole may function as an injection port for resin injection. Note that the through-hole may be provided in plurality. In this case, at least one of the through-holes may function as an air exhaust port for exhausting air during resin injection.

Referring again to FIG. 10, the jig structure 100 may include a lower jig 110 configured to support the plurality of battery cells 10 from below, a side jig 120 mounted on the lower jig 110 and configured to cover the plurality of battery cells 10 from a side, and an upper jig 130 provided above the plurality of battery cells 10 and configured to be coupled with the side jig 120. In this case, the upper jig 130 may have at least one through-hole.

In addition, the jig structure 100 may include a guide jig 140 detachably configured on one side of the side jig 120 and including a cell receiving portion 141 for receiving the battery cells 10. The guide jig 140 may be configured to be coupled with and then removed from the side jig 120 during a manufacturing process of the battery cell assembly 1.

The guide jig 140 may include the cell receiving portion 141 in which the battery cell 10 can be seated at a specific position. For example, the cell receiving portion 141 may include a protrusion extending along an outer peripheral surface of the battery cell 10. The battery cell 10 may be mounted in the cell receiving portion 141. Note that the guide jig 140 may include a frame receiving portion 143 on which the top frame 70 can be mounted.

Note that the jig structure 100 may include a side pad 220 provided on the side jig 120. The side pad 220 may be located in a region between the side jig 120 and the battery cells 10. The side pad 220 may be fixed in contact with an inner surface of the side jig 120. In this case, the side pad 220 may include silicone. The side pad 220 may be, for example, a silicone pad and may be configured to come into direct contact with the plurality of battery cells 10.

According to the above configuration, in a process of removing the jig structure 100 from the battery cell assembly 1 after the battery cell assembly 1 is manufactured, the jig structure 100 and the battery cell assembly 1 can be easily separated. For example, a foam resin does not come off easily when attached to plastic or metal. Therefore, if the jig structure 100 is composed of the side jig 120 without the side pad 220, it is not easy to remove the side jig 120 after potting the resin. However, according to the above structure of the present disclosure, the potting unit 20 including the foamed resin can be easily separated from the side jig 120 by the side pad 220 including silicone.

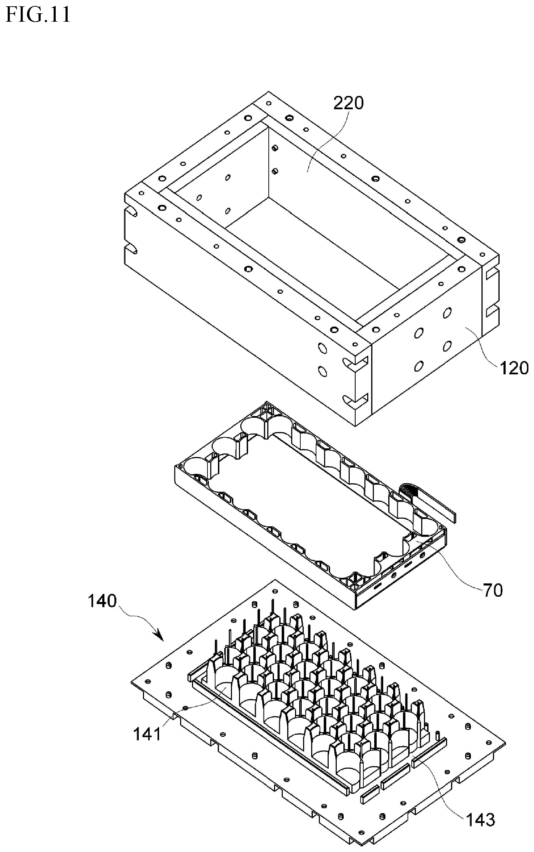

FIGS. 11 to 17 are views illustrating a process for manufacturing the battery cell assembly 1 using the battery jig of FIG. 10.

FIG. 11 is a view illustrating a process of coupling the guide jig 140 and the side jig 120 to manufacture the battery cell assembly 1. Referring to FIG. 11, the top frame 70 and the side jig 120 are mounted on the guide jig 140 including the cell receiving portion 141 and the frame receiving portion 143. In this case, the side pad 220 is attached to the inner surface of the side jig 120. The side pad 220 may include silicone as described above.

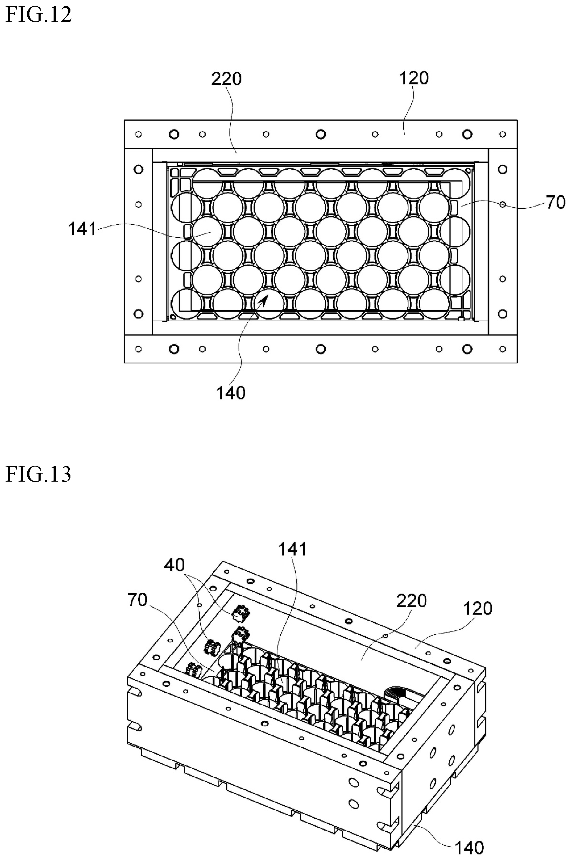

FIG. 12 is a top view showing a state in which the structural elements of FIG. 11 are coupled. Referring to FIG. 12, glue may be applied on the top frame 70 to fix the battery cells 10 and the top frame 70. For example, as shown in FIG. 12, glue may be applied along a main body of the top frame 70.

FIG. 13 is a view illustrating a state in which the coupling member 40 is coupled on the side jig 120 and the side pad 220. In order to embed the coupling member 40 on the potting unit 20, it is necessary to fix the coupling member 40 at a predetermined position before potting. At this time, as shown in FIG. 13, the coupling member 40 may be coupled in advance on the side jig 120. Later, when pouring and curing the potting resin and then removing the side jig 120, the coupling member 40 may also be removed together with the side jig 120, and then only the coupling member 40 may be re-inserted onto the potting unit 20, thereby fixing the coupling member 40 at a predetermined position on the potting unit 20. Alternatively, a method is also possible in which the potting resin is poured and cured in a state in which the coupling member 40 is coupled in advance on the side jig 120, as shown in FIG. 13, and then only the side jig 120 is selectively removed in a state in which the coupling member 40 is coupled on the potting unit 20. Alternatively, although not shown, as another exemplary embodiment, a method is also possible in which the coupling member 40 is fixed with a pin on the side pad 220, and then the potting resin is poured and cured.

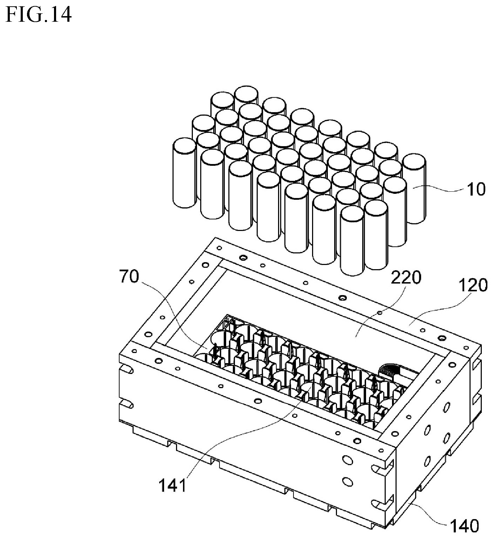

FIG. 14 is a view illustrating a process of mounting the plurality of battery cells 10 in the jig structure 100.

Referring to FIG. 14, the cell receiving portion 141 capable of receiving the battery cell 10 may be provided on the guide jig 140. The cell receiving portion 141 is preferably provided in plurality. A space between the cell receiving portion 141 and the cell receiving portion 141 may be partitioned by a physical member. Therefore, when the battery cell 10 is seated in the cell receiving portion 141, movement to other locations may be restricted.

In this case, the battery cell 10 may be mounted such that the upper surface thereof faces downward with reference to FIG. 14. That is, the surface of the battery cell 10, which is visible in the upwardly opened jig structure 100 with reference to FIG. 14, may correspond to the lower surface of the battery cell 10. This is because the jig structure 100 is to be turned upside down at a later stage, and therefore, the battery cell 10 is mounted such that the upper surface thereof faces downward.

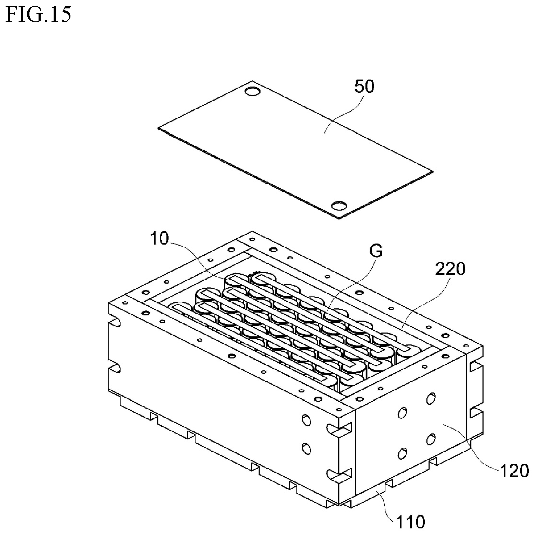

FIG. 15 is a view illustrating a process of mounting the lower plate 50 to the plurality of battery cells 10.

Once the plurality of battery cells 10 are mounted on the guide jig 140, glue is applied to one surface of each battery cell 10. For example, as described above with respect to FIG. 14, the lower surfaces of the battery cells 10 face upward with reference to the drawing. At this time, glue may be applied to the lower surfaces of the battery cells 10. The lower plate 50 may be adhered to the surfaces to which the glue has been applied. That is, the lower surfaces of the battery cells 10 and the lower plate 50 may be adhered to each other. The lower plate 50 serves to support the plurality of battery cells 10 from below when the jig structure 100 is turned upside down at a later stage.

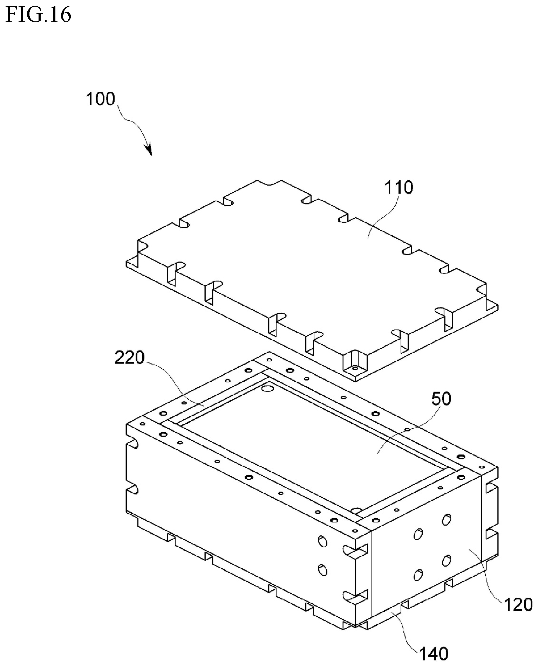

FIG. 16 is a view illustrating a process of mounting the lower jig 110 on the side jig 120.

After the lower plate 50 is bonded to the lower surfaces of the battery cells 10 as shown in FIG. 15, the lower jig 110 may be coupled to the side jig 120 to provide pressure to the bonding surface. The lower jig 110 may be configured to support the lower plate 50 from one side. The lower jig 110 and the side jig 120 may be coupled by, for example, bolt coupling. However, the method of coupling the lower jig 110 and the side jig 120 is not limited thereto, and any detachable coupling method is included in the scope of the present disclosure.

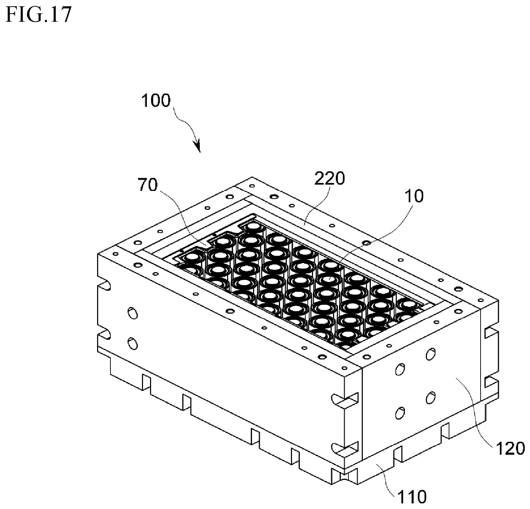

FIG. 17 is a view illustrating a state in which the jig structure 100 of FIG. 16 is turned upside down.

When the lower jig 110 is coupled to the side jig 120 in FIG. 16, the jig structure 100 is turned upside down. After the jig structure 100 is turned upside down, the glue is cured at a predetermined temperature for a predetermined time. For example, the glue may be cured at about 55 to 60°C for about 50 minutes to 1 hour.

Note that when the jig structure 100 is turned upside down, the guide jig 140 located at the lower portion becomes located at the upper portion of the jig structure 100. After that, the guide jig 140 is removed from the side jig 120. The guide jig 140 is a member for guiding the positions of the battery cells 10 and/or the top frame 70. Since the positions of the top frame 70 and the battery cells 10 are fixed by the glue or the like, even when the guide jig 140 is removed, the positions of the battery cells 10 and the top frame 70 can be fixed.

When the guide jig 140 is removed, a state as shown in FIG. 17 is achieved, in which the upper surfaces of the battery cells 10 and a portion of the top frame 70 are exposed upward. In this state, the electrical connection portion 30 may be formed between the battery cells 10. For example, a battery cell 10 and an adjacent battery cell 10 may be electrically connected by wire bonding. Various series-parallel connection methods can be implemented through wire bonding.

After that, a potting resin may be injected between the battery cells 10 to form the potting unit 20. At this time, the potting unit 20 may be configured to bury the electrical connection portion 30.

In one aspect of the present disclosure, a predetermined space is preferably provided between the pad 200 and the battery cell 10 so that the pad 200 and the battery cell 10 do not come into direct contact. That is, it is necessary to ensure a space between the pad 200 and the battery cell 10 so that the potting resin can be injected into the space.

After pouring the potting resin as described above, when the upper jig 130 is coupled to the side jig 120 as shown in FIG. 10 and curing is performed at room temperature, the resin is cured and the potting unit 20 is formed. After that, when the jig structure 100 is disassembled, the battery cell assembly 1 as shown in FIG. 8 is completed.

Alternatively, as another exemplary embodiment, unlike FIG. 10, the upper jig 130 may include at least one through-hole, and after the upper jig 130 is coupled with the side jig 120, a resin may be injected through the through-hole. After the resin is cured, the overflowing resin is removed and then the jig structure 100 is disassembled.

The jig structure 100 may be configured such that the lower jig 110, the side jig 120, and the upper jig 130 can all be disassembled from each other. That is, the lower jig 110, the side jig 120, and the upper jig 130 may be configured to be detachably coupled to each other.

According to the jig structure 100 of the present disclosure as described above, since the battery cell assembly 1 does not include a separate housing and fixes and receives the battery cells 10 as the potting unit 20, the material cost and the weight can be reduced. Accordingly, the energy densities of the battery cell assembly 1 and the battery pack 2000 can be improved. In addition, since the jig structure 100 for manufacturing such a battery cell assembly 1 includes a material that is easy to separate from the potting unit 20 in the region in contact with the potting unit 20, the process of disassembling the jig structure 100 can be smoothly performed.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited exemplary embodiments and drawings, the present disclosure is not limited thereto, and a variety of modifications and variations can be made within the technical spirit of the present disclosure and the equivalent range of the claims described below by one skilled in the art to which the present disclosure belongs.

### [INDUSTRIAL APPLICABILITY]

The present disclosure can provide a battery cell assembly that does not require a separate housing, and allows structural elements such as a busbar, a BMS, and a mounting element to be directly attached to a foamed resin.

## Claims

1. A battery cell assembly comprising:
a plurality of battery cells; and
a potting unit disposed outside the plurality of battery cells and interposed between the plurality of cells and configured to fix the plurality of battery cells.

2. The battery cell assembly of claim 1, wherein the battery cell assembly does not comprise a separate housing having a receiving space for receiving the plurality of battery cells.

3. The battery cell assembly of claim 1, wherein the potting unit is exposed to the outside of the battery cell assembly.

4. The battery cell assembly of claim 1, wherein the potting unit comprises a resin.

5. The battery cell assembly of claim 1, wherein the potting unit comprises a foamed resin.

6. The battery cell assembly of claim 1, further comprising an electrical connection portion configured to electrically connect the plurality of battery cells to each other.

7. The battery cell assembly of claim 6, wherein the electrical connection portion is configured to be embedded in the potting unit.

8. The battery cell assembly of claim 1, further comprising a coupling member embedded in the potting unit and configured to be coupled with another structural element.

9. The battery cell assembly of claim 8, wherein the coupling member is configured as an insert nut or a bushing.

10. The battery cell assembly of claim 1, further comprising a lower plate configured to support the plurality of battery cells and a lower portion of the potting unit.

11. The battery cell assembly of claim 1, further comprising a spacer positioned above the plurality of battery cells and configured to have at least a partially open region to allow at least a portion of the battery cells to be exposed to the outside.

12. The battery cell assembly of claim 1, further comprising a top frame provided on an upper portion of the battery cell assembly and configured to surround an outer periphery of side surfaces of the battery cell assembly.

13. The battery cell assembly of claim 12, wherein the top frame is configured such that at least one of a busbar and an ICB is mounted thereon.

14. A battery pack comprising one or more battery cell assemblies of any one of claims 1 to 13.

15. A vehicle comprising the battery pack of claim 14.

16. A jig structure, wherein
the jig structure is configured to receive a plurality of battery cells therein, and
the jig structure is configured to interpose a pad between the jig structure and a plurality of battery cells received in the jig structure.

17. The jig structure of claim 16, wherein the jig structure comprises
a lower jig configured to support the plurality of battery cells from below,
a side jig mounted on the lower jig and configured to cover the plurality of battery cells from a side,
a side pad provided on the side jig,
an upper jig provided above the plurality of battery cells and configured to be coupled with the side jig, and
a guide jig detachably configured on one side of the side jig and comprising a cell receiving portion for receiving the battery cells.

18. The jig structure of claim 17, wherein the side pad comprises silicone.

19. The jig structure of claim 17, wherein the lower jig, the side jig, and the upper jig are configured to be detachably coupled to each other.
